(19) Europäisches Patentamt / European Patent Office / Office européen des brevets

(11) **EP 1 829 668 A1**

(12) **EUROPEAN PATENT APPLICATION**
published in accordance with Art. 158(3) EPC

(43) Date of publication:
**05.09.2007 Bulletin 2007/36**

(21) Application number: **05811707.8**

(22) Date of filing: **29.11.2005**

(51) Int Cl.:
*B29C 47/14* (2006.01)    *B29C 47/88* (2006.01)
*B29C 47/92* (2006.01)    *B29C 55/02* (2006.01)
*C08J 5/18* (2006.01)    *C08L 67/02* (2006.01)
*B29K 67/00* (2006.01)    *B29L 7/00* (2006.01)

(86) International application number:
**PCT/JP2005/021836**

(87) International publication number:
**WO 2006/059584 (08.06.2006 Gazette 2006/23)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.12.2004 JP 2004348275**

(71) Applicant: **Toyo Boseki Kabushiki Kaisha Osaka-shi, Osaka 530-8230 (JP)**

(72) Inventors:
• **IMAI, Kazumoto**
  **Toyo Boseki K.K., Inuyama Factory 3**
  **Inuyama-shi**
  **Aichi 484-508 (JP)**

• **SHIMIZU, Hideki**
  **Toyo Boseki K.K., Inuyama Factory3**
  **Inuyama-shi**
  **Aichi 484-508 (JP)**
• **ODA, Naonobu**
  **Toyo Boseki K.K., Inuyama Factory 3**
  **Inuyama-shi**
  **Aichi 484-508 (JP)**

(74) Representative: **Weber, Thomas**
  **Deichmannhaus am Dom**
  **Postfach 10 22 41**
  **50462 Köln (DE)**

(54) **POLYESTER RESIN FILM AND PROCESS FOR PRODUCING THE SAME**

(57)    A polyester stretch film having good tear property and good twistability, which is useful as a packaging film or a film for tape, as well as for stick packaging, PTP packaging, drug bag, folding packaging, a lid material, and an opening of beverage pack is provided at a low cost without losing heat resistance, cold resistance, moisture-proof property, transparency, aroma retention and the like.

A polyester resin film having excellent hand-tearability and twistability is produced by a production method of a polyester resin film, which comprises mixing not less than 2 kinds of polyester resin starting materials having different melting points or melting temperatures, and extruding the mixture, wherein respective starting materials are cast in different extruders, melted, supplied to one mixer in a molten state, mixed and extruded to give a sheet, and the sheet is stretched at least in the monoaxial direction and heat-treated at a temperature of not lower than a temperature 3°C lower than the melting point or melting temperature of the resin starting material having the lowest melting point or the lowest melting temperature.

**FIG. 1**

EP 1 829 668 A1

**Description**

**Technical Field**

The present invention relates to a polyester film having easy-to-tear property and easy-to-bend property. More particularly, the present invention relates to a polyester stretched film useful as a packaging film, which maintains practical property without losing the superior properties of a polyester stretched film such as strength, heat resistance, aroma retention property, water resistance and the like, and shows good hand-tearability, bending property and twist fixability.

**Background Art**

Conventionally, as a film superior in hand-tearability and twistability, cellophane is known. Since cellophane shows fine characteristics in transparency, easy-to-cut property, twist fixability and the like, it has been frequently used as various packaging materials and materials for adhesive tapes. However, cellophane has hygroscopicity and the characteristics vary depending on the season, which makes it difficult to always provide cellophane having constant quality.

On the other hand, packaging bags comprising a stretched polyethylene terephthalate film having superior properties such as toughness, heat resistance, water resistance, transparency and the like have been used. Although the bags have these superior properties, they are associated with defects in that they lack easy-to-tear property, bending property and twistability, and therefore, cannot be used for these packagings.

As a method for improving the easy-to-tear property and bending property, which are the above-mentioned problems, a production method of a polyester film having good tear property and good twistability has been proposed, which comprises stretching at least monoaxially an unstretched laminate film comprising polyester resin layer (A) and polyester resin layer (B) having a melting point higher than the melting point of polyester resin layer (A) by not less than 10˚C and having a thickness of not less than 5% and not more than 60% of the total thickness laminated on at least one surface of polyester resin layer (A), and heat treating the laminate at a temperature not lower than 10˚C lower than the melting point of polyester resin layer (A) and lower than the melting point of polyester resin layer (B).
Patent reference 1: JP-B-3561919

However, the method comprising stretching at least monoaxially an unstretched laminate film comprising polyester resin layer (A) and polyester resin layer (B) having a melting point higher than the melting temperature of polyester resin layer (A) by not less than 10˚C and having a thickness of not less than 5% and not more than 60% of the total thickness laminated on at least one surface of polyester resin layer (A), and heat treating the laminate at a temperature not lower than 10˚C lower than the melting point of polyester resin layer (A) and lower than the melting point of polyester resin layer (B) may fail to achieve sufficient easy-to-tear property and easy-to-bend property due to an influence of polyester resin layer (B) having a high melting point. When the thickness of polyester resin layer (B) is reduced to afford easy-to-tear property and easy-to-bend property, the tear property and twistability become sufficient but the film may be torn during twist packaging. Therefore, use of the film both for easy opening packaging and twist packaging has been difficult.

In addition, a polyester film superior in hand-tearability, which is made from a mixture of polyester resin

(A) and polyester resin (B), wherein an acid component of polyester resin (A) is mainly terephthalic acid, a diol component is mainly ethylene glycol, an acid component of polyester resin (B) is mainly terephthalic acid, cyclohexanedimethanol is contained as a diol component, and the mass ratio A/B of polyester resin (A) and polyester resin (B) is 95/5 to 30/70, has been proposed.
Patent reference 2: JP-A-2003-155403

However, a polyester film superior in hand-tearability, which is made from a mixture of polyester resin (A) and polyester resin (B), wherein an acid component of polyester resin (A) is mainly terephthalic acid, a diol component is mainly ethylene glycol, an acid component of polyester resin (B) is mainly terephthalic acid, cyclohexanedimethanol is contained as a diol component, and the mass ratio A/B of polyester resin (A) and polyester resin (B) is 95/5 to 30/70, a polyester film superior in hand-tearability, which is made from a mixture of polyester resin (A) and polyester resin (B), wherein an acid component of polyester resin (A) is mainly terephthalic acid, the diol component is mainly ethylene glycol, the acid component of polyester resin (B) is mainly terephthalic acid, cyclohexanedimethanol is contained as a diol component, and the mass ratio A/B of polyester resin (A) and polyester resin (B) is 95/5 to 30/70, is superior in hand-tearability but does not have easy-to-bend property. Thus, use of the film as an alternative of cellophane is difficult.

To maintain superior strength, heat resistance, aroma retention property and the like of polyester, appropriate crystallinity is necessary and, for this end, copolymerization of different polyesters by transesterification reaction needs to be prevented.

For this purpose, when producing a film by mixing such two kinds of polyester resins, for example, a device is necessary to reduce the calorie on a resin mixture utilizing the molten temperature and dwelling time of the resins.

Moreover, the temperature of an extruder for a mixture of polyester resin (A) comprising mainly terephthalic acid as an acid component and mainly ethylene glycol as a diol component, and polyester resin (B) comprising mainly terephthalic acid as an acid component and cyclohexanedimethanol as a diol component is set for not less than the melting point of polyester resin (A) in consideration of the production stability and the like. In this case, polyester resin (B) having a low melting temperature tends to decompose easily, and the molecular weight tends to become smaller. As a result, compatibility with polyester resin (A) is improved, permitting higher uniformity. As a result, a copolymer of terephthalic acid derived from polyester resin (A) and ethylene glycol, and terephthalic acid derived from polyester resin (B) and cyclohexanedimethanol is obtained rather than a mixture of polyester resin (A) comprising mainly terephthalic acid as an acid component and mainly ethylene glycol as a diol component, and polyester resin (B) comprising mainly terephthalic acid as an acid component and cyclohexanedimethanol as a diol component, which is the original constitution, which in turn makes it difficult to afford stable quality.

Particularly, when industrially producing a polyester film, use of chucking allowance due to a tenter extender and end portions resulting from product winding as recovered starting materials is essential. For granulation of recovered starting materials, a method comprising pulverizing, melting again and granulating a film made from such mixture is often employed.

During the granulation step including re-melting and kneading of such film, in a polyester film superior in hand-tearability, which is made from a mixture of polyester resin

(A) and polyester resin (B), wherein the acid component of polyester resin (A) is mainly terephthalic acid, the diol component is mainly ethylene glycol, the acid component of polyester resin (B) is mainly terephthalic acid, cyclohexanedimethanol is contained as the diol component, and the mass ratio A/B of polyester resin (A) and polyester resin (B) is 95/5 to 30/70, which is superior in hand-tearability, decomposition of polyester resin (B) having a low melting temperature further proceeds, compatibility with polyester resin (A) is improved, and a copolymer of terephthalic acid derived from polyester resin (A) and ethylene glycol, and terephthalic acid derived from polyester resin (B) and cyclohexanedimethanol is obtained, which in turn makes it difficult to afford stable quality.

In addition, when such a recovered starting material is not used, a commodity lacking a competitive power in the sales price is inevitably produced, which is industrially impractical.

**Brief Description of the Drawing**

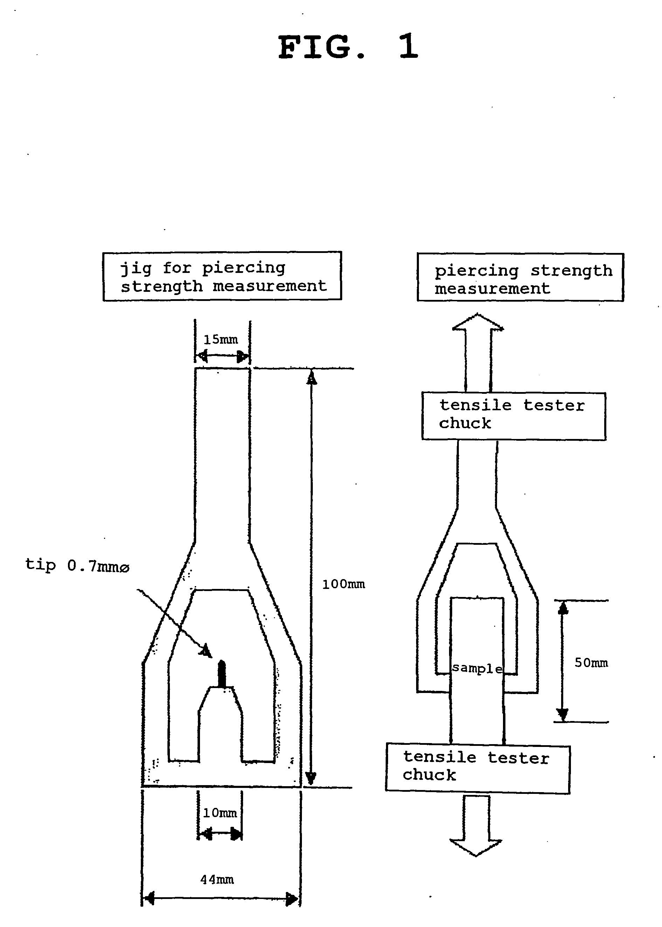

Fig. 1 shows a jig for piercing strength measurement and a method for measuring piercing strength.

**Disclosure of the Invention**

**Problems to be Solved by the Invention**

The present invention has been made in view of the prior art problems as a background. Particularly, easy-to-bend property and twistability were noted, studied with the purpose of industrially stably affording a film having the property of bendability as paper, and concurrently having the superior properties of polyester film, such as strength, heat resistance, moisture-proof property, transparency, aroma retention property and the like, and completed the study.

**Means of Solving the Problems**

The present inventors have conducted intensive studies in an attempt to solve the above-mentioned problems and finally completed the present invention.
Accordingly, the present invention provides a production method of a polyester resin film, which comprises mixing not less than 2 kinds of polyester resin starting materials having different melting points or melting temperatures, and extruding the mixture, wherein respective starting materials are cast in different extruders, melted, supplied to one mixer in a molten state, mixed and extruded to give a sheet, and the sheet is stretched at least in the monoaxial direction and heat-treated at a temperature of not lower than a temperature 3°C lower than the melting point or melting temperature of the resin starting material having the lowest melting point or the lowest melting temperature.

In this case, the proportion of a resin having a melting point not higher than a temperature 3°C higher than the heat treatment temperature of the aforementioned film is preferably not less than 20 wt% and not more than 65 wt%.

In this case, moreover, the melting point of the resin having the highest melting point in the aforementioned film is preferably not lower than 245°C.

In this case, furthermore, the difference in the melting temperature of the aforementioned resin having the highest melting point and the resin having the lowest melting point or the lowest melting temperature is preferably not lower than 15˚C.

In this case, still moreover, the aforementioned film is preferably superior in the hand-tearability and twistability.

Another present invention is an easy-to-tear, biaxially stretched polyester resin film, which is obtained by a method comprising mixing not less than 2 kinds of polyester resin starting materials having different melting points or melting temperatures, and extruding the mixture, wherein respective starting materials are cast in different extruders, melted, supplied to one mixer in a molten state, mixed and extruded to give a sheet, and the sheet is stretched at least in the monoaxial direction and heat-treated, and shows a piercing strength of not more than 8.0N.

In this case, the proportion of a resin having a melting point not higher than a temperature 3˚C higher than the heat treatment temperature of the aforementioned film is preferably not less than 20 wt% and not more than 65 wt%.

In this case, the proportion of the resin having a melting point not higher than a temperature 3˚C higher than the heat treatment temperature of the aforementioned film is preferably not less than 20 wt% and not more than 65 wt%.

In this case, moreover, the melting point of the resin having the highest melting point in the aforementioned film is preferably not lower than 245˚C.

In this case, furthermore, the difference in the melting temperature of the aforementioned resin having the highest melting point and the resin having the lowest melting point or melting temperature is preferably not lower than 15˚C.

In this case, still moreover, the aforementioned film is preferably superior in the hand-tearability and twistability.

## Effects of the Invention

The polyester resin film of the present invention is a laminate film having the original properties of polyester such as heat resistance, cold resistance, moisture-proof property, transparency, aroma retention property and the like, while showing superior easy-to-tear property and easy-to-bend property. Due to the improved easy opening property, packaging bags do not need a notch, and can be torn open from any position without using scissors and the like. Moreover, due to the superior easy-to-bend property, the film can be preferably used advantageously for bending packaging and twist packaging of chocolate, candy, gum and the like.

## Best Mode for Embodying the Invention

The present invention is explained in detail in the following.

The production method of the film to be used in the present invention is characterized by mixing 2 or more kinds of polyester resin starting materials having different melting points or melting temperatures, and extruding the mixture, wherein respective starting materials are cast in different extruders, melted, supplied to one mixer in a molten state, mixed and extruded to give a film.

The polyester resin to be used in the present invention includes, for example, polyethylene terephthalate, polyethylene naphthalate, a copolymer comprising the constituent components thereof as main components, and the like for the polyester resin on the high melting point side. For example, as an acid component for a copolymer, isophthalic acid, naphthalenic acid, sebacic acid, adipic acid, dimer acid and the like are used and, as a glycol component, trimethylene glycol (propylene glycol), butanediol, diethylene glycol, cyclohexanone dimethanol, cyclohexane dimethanol, neopentyl glycol and the like are used. In addition, random-polymerized resin, block-polymerized resin and the like can be used according to the design.

In the present invention, the melting point of a polyester resin on the high melting point side is preferably not lower than 245˚C, more preferably not lower than 250˚C, to maintain heat resistance, rigidity, moisture-proof property and transparency of the film.

When the melting point of the polyester resin on the high melting point side is lower than 245˚C, the film shows inconvenient heat resistance to cause, for example, deformation or melting during processing.

In the present invention, as the polyester resin having a low melting point or a low melting temperature, a polyester resin obtained by copolymerizing terephthalic acid as an acid component, ethylene glycol as a main glycol component and, for example, isophthalic acid, sebacic acid, adipic acid, dimer acid and the like as an acid component, or trimethylene glycol, butanediol, diethylene glycol, cyclohexanone dimethanol, cyclohexane dimethanol, neopentyl glycol and the like as a glycol component can be used. In addition, a random-polymerized resin, a block-polymerized resin and the like can be used according to the design.

In the present invention, the low melting point, or the melting point or melting temperature of the polyester resin having a low melting temperature is preferably lower by not less than 15˚C, more preferably not less than 20˚C, than the melting point of a polyester resin having the highest melting point to be used in the present invention.

The glass transition temperature of the polyester resin to be used in the present invention is preferably not lower than 65˚C, more preferably not lower than 70˚C.

The polyester resin to be used in the present invention is subjected to a melt polycondensation reaction, or subsequent solid phase polymerization. The intrinsic viscosity is preferably 0.55 to 1.55, more preferably, 0.58 to 1.20. When the intrinsic viscosity is less than 0.55, the film becomes too brittle and has insufficient strength as a film, and when it exceeds 1.55, film forming becomes difficult.

In the present invention, a heat treatment at a temperature of not lower than a temperature 3°C lower than the melting point or melting temperature of a resin starting material having the lowest melting point or the lowest melting temperature is available, and a heat treatment at a temperature of not lower than the melting point or melting temperature is more preferable.

In the present invention, at least 2 kinds of polyester resins having different melting temperatures are dispersed in a layer- or particle-state and, at least after monoaxial stretching, the stretching orientation disappears since the resin starting material is melted by a heat treatment at a temperature of not lower than a temperature 3°C lower than the melting point or melting temperature of a resin starting material having the lowest melting point or the lowest melting temperature, which in turn is considered to express hand-tearability and twistability that are the objects of the present invention.

In addition, it has been clarified that a film having such structure shows a piercing strength of not more than 8.0N as measured by the following method. The piercing strength is preferably not more than 6.5N, more preferably not more than 5.5N, particularly preferably not more than 4.5N.

The measurement method of the "piercing strength" is as follows.

A sample 200 mm in the longitudinal direction, 20 mm in the width direction is cut out. Using a tensile tester (manufactured by Shimadzu Corporation Autograph AGC-1KNG type), the upper end portion of the measurement jig shown in Fig. 1 (a) was clipped to the upper chuck of the tensile tester, as shown in Fig. 1 (b). The sample is folded in two along the longitudinal direction into 100 mm×20 mm, and the folded part was placed abutting the steel ball (0.7 mmϕ) at the tip of the central bar in the measurement jig shown in Fig. 1 (a). The end on the opposite side of the folded sample was clipped to the lower chuck at the lower side of the measurement jig at a position where the distance from the tip of the piercing bar was 50 mm. Then, the chuck was pulled at 50 mm/min so that the folded part of the sample would be pierced by the steel ball (diameter 0.7 mm) at the tip of the stick. The load with which the sample was pierced was determined. The measurement was performed with n=5 and the average value of 3 measures excluding the highest and the lowest values was taken.

In the present invention, the proportion of the resin having a melting point not higher than a temperature 3°C higher than the heat treatment temperature is preferably not less than 20 wt% and not more than 65 wt%, preferably not less than 25 wt% and not more than 50 wt%, more preferably not less than 30 wt% and not more than 45 wt%.

In the present invention, when the proportion of the resin having a melting point not higher than a temperature 3°C higher than the heat treatment temperature is less than 20 wt%, the influence of disappearance of the orientation is small, and the hand-tearability and twistability cannot be afforded. When it exceeds 65 wt%, toughness, heat resistance and barrier property, which are the characteristics of polyester film, cannot be achieved easily. In addition, film melting occurs in the heat treatment step, making it difficult to produce a film.

Generally, when 2 or more kinds of polyester resins are used to produce a film, the mixing state of them needs to be controlled. In the case of a polyester resin film having hand-tearability and twistability as in the present invention, for example, opposite properties of strength and brittleness or cutting property, or elasticity and dead fold property of the film, should be achieved simultaneously. For this end, to control crystallization rate and crystallinity, a transesterification reaction of the polyester on the high melting point side and the polyester on the low melting point side should be suppressed so that the copolymerization of them will not occur.

If a transesterification reaction of the polyester on the high melting point side and the polyester on the low melting point side should occur, a copolymer of the polyester on the high melting point side and the polyester on the low melting point side is produced, the ethyleneterephthalate structure, which is the main component structure of the polyester on the high melting point side, is randomized, thus impairing its characteristic stiffness. On the other hand, since the produced copolymer has a random structure and a random molecular weight, the rigidity becomes low and, since the relationship with the heat treatment temperature, which is the characteristic of the present invention, is unknown, expression of the hand-tearability and twistability becomes unstable.

In consideration of high level processing adequacy and design, mere suppression of the transesterification reaction is not satisfactory. The reason therefor is assumed to be the following phenomenon. Even when the transesterification reaction is suppressed, for example, when a poly-terephthalic acid-ethylene glycol-neopentyl glycol copolymer (hereinafter abbreviated as CHDM copolymer) is very finely dispersed in polyethylene terephthalate (hereinafter abbreviated as PET), or when they become compatible, a transesterification reaction of PET and CHDM copolymer occurs, which in turn partly causes late crystallization and facilitates whitening. Therefore, it seems to be preferable to reduce the dispersion and/or compatibility of PET and CHDM copolymer, or produce a crude mixture.

To satisfy the above-mentioned aspects, in the present invention, the following production method is preferably employed.

Since 2 or more kinds of polyester resin starting materials having different melting points or melting temperatures can be melted at each suitable temperature (not less than the melting point, melting point plus not more than 30˚C), the production method comprises casting polyester resin starting materials to separate extruders, mixing each molten polyester before extruding from the die, leading the mixture to the die, mixing and extruding the mixture.

In general production of polyester film, a material constituting a single layer is cast into a single extruder, melted and extruded to give a film. Also in the patents recited as examples in the Background Art section, 2 or more kinds of different materials are used but as the extruder, a single extruder is used. This is assumed to have resulted from the consideration of stability and economic aspect during film forming by conventional techniques. Therefore, it seems a higher quality film was difficult to obtain. However, it has been clarified that a film having improved quality can be obtained while maintaining the stability during film forming, by employing the method to be mentioned below.

The reason for the good quality and producibility achieved by this method is assumed as follows. For example, when a film is produced by mixing PET (melting point 255˚C) and CHDM copolymer (melting temperature about 180˚C) using only a single extruder having a monoaxial or biaxial screw, which is a generally-employed method, since the difference between the melting points of the two is not lower than 70˚C, the temperature of the extruder needs to be set to not lower than the melting point of PET when they are blended as resin chips. Generally, the temperature is set to not lower than 280˚C in consideration of the production stability and the like. Since CHDM copolymer shows faster decomposition rate as compared to PET, extrusion is preferably performed at a low temperature. However, since the molten conditions of PET having a high melting point need to be employed, the molecular weight of the CHDM copolymer may decrease and a low molecular weight product may be generated.

As a result, compatibility of PET and CHDM copolymer is improved, permitting higher uniformity, which in turn facilitates copolymerization. Even when the both polyesters are not copolymerized and have the crystallinity suggesting near independent state, independency of crystallinity at a higher level cannot be maintained possibly due to an influence of the uniformity, and toughness and heat resistance, which are characteristics of the polyester film, were assumed to be degraded.

In the present invention, as a machine for mixing respectively melted polyester resins, conventional monoaxial extruders, biaxial extruders, dynamic mixers, static mixers and the like can be used. Particularly, when separately melted resins are to be mixed using a conventional monoaxial or biaxial extruder, the extruder is required to have a small compression ratio or a small L/D of the whole extruder screw and the compressor part, so that the resins will not be mixed too uniformly or become highly compatible.

In a static mixer, for example, elements of rectangle plates each twisted 180˚ are alternately and repeatedly arranged in a resin flow path as in the one manufactured by Noritake Co., Ltd. By passing one of these elements, the number of layers doubles. Theoretically, therefore, passage of elements in the number of n results in 2n layers. In practice, however, the number may vary depending on the flow path diameter, discharge rate, and viscosity, surface tension and the like of each resin. In the present invention, the number of layers at least at the center in the thickness direction of the film, a region having a thickness of 2 $\mu$m, is not less than 5, preferably not less than 50.

In the mixing step, a static mixer is preferably used to achieve more suitable dispersibility. The number of the elements in the static mixer is preferably set to not less than 8 and not more than 32, more preferably not less than 12 and not more than 28.

Using a static mixer having elements in such a number, suitably low dispersibility can be easily afforded, and a good film free of whitening and cleavage problem and superior in piercing strength can be obtained.

In the present invention, the polyester starting materials to be supplied to respective extruders may be single starting materials or mixtures. In addition, silicon dioxide, kaolin, clay, calcium carbonate, calcium terephthalate, aluminum oxide, titanium oxide, calcium phosphate, silicone particles and, where necessary, additives such as stabilizer, colorant, antioxidant, antifoaming agent, antistatic agent and the like can be added. In the case of a mixture, not less than 60%, more preferably not less than 80%, still more preferably not less than 90%, of the main component of each starting material is preferably a single starting material.

**Examples**

The present invention is explained in more detail in the following by Examples. In the Examples, the respective property values of polyester were measured as follows.

1. Intrinsic viscosity (dl/g)

A polymer (0.125 g) was dissolved in phenol/tetrachloroethane=6/4 (weight ratio) (25 ml) and measured at 25˚C using Ubbelohde viscometer.

2. Glass transition temperature (˚C)

A sample (about 5.0 mg) was prepared and measured using DSC-60 type differential scanning calorimeter manufactured by Shimadzu Corporation, at a temperature rising rate of 10˚C/min within the range of 30˚C to 280˚C to obtain a DSC curve. The inflection point of glass transition was read therefrom.

3. Melting point (˚C)

A sample (about 5.0 mg) was prepared and measured using DSC-60 type differential scanning calorimeter manufactured by Shimadzu Corporation, at a temperature rise rate of 10˚C/min within the range of 30˚C to 280˚C to obtain a DSC curve. The melting peak was read therefrom. When the melting point of a resin cannot be confirmed, the measurement was conducted according to JIS-K7206 "Vicat softening temperature measurement" and the measured temperature was taken as a softening temperature.

4. Hand-tearability

The measurement was performed by a sensory test. Polyester film/ester adhesive/9 $\mu$m aluminum foil/15 $\mu$m extruded LDPE were laminated to give a laminate, from which a bag was produced by heat sealing. The opening property when the sealed portion was torn with hands was evaluated. When the bag was held by both hands, an interval of about 3 mm was taken and the test was performed in both the longitudinal direction and the width direction.

O: easily opened without using nails
∆: easily opened by using nails
x: cannot be opened easily even by using nails

5. Bending property

After dividing the sample into three along the whole width, measurement samples (n = 2) of 60 mm in the longitudinal direction and 10 mm in the width direction were obtained from the center portions of the divided films and placed on a silicone sheet spread on a glass plate. The samples were bent 180˚ at 20 mm from the end and a load of 0.5 Kg/cm$^2$ was applied for 10 seconds onto the bent portions. The recovery angles 30 seconds after the removal of the load were read. A smaller angle means superior bending property, and the measurement value of the paper was 20˚.

⊙: recovery angle less than 30˚
O: recovery angle not less than 30˚ and less than 50˚
∆: recovery angle not less than 50˚ and less than 70˚
x: recovery angle not less than 70˚

6. Heat resistance

After dividing the sample into three along the whole width, measurement samples of 250 mm in the longitudinal direction and 10 mm in the width direction were obtained from the center portions of the divided films. The samples were marked at an interval of 200 mm, and interval A was measured under a constant tension of 5 g. Subsequently, the samples were stood without a load in an oven at an atmosphere of 150˚C for 30 min. The samples were taken out from the oven and cooled to room temperature. Interval B was measured under a constant tension of 5 g, respective thermal shrinkage rates were calculated from the following equation and the average value thereof was obtained.

$$\text{thermal shrinkage} = (A-B)/A \times 100 \ (\%)$$

O: thermal shrinkage less than 3%
∆: thermal shrinkage not less than 3% and less than 5%
✕: thermal shrinkage not less than 5%

7. Piercing strength

A sample 200 mm in the longitudinal direction, 20 mm in the width direction is cut out. Using a tensile tester (manufactured by Shimadzu Corporation Autograph AGC-1KNG type), the upper end portion of the measurement jig shown in Fig. 1 (a) was clipped to the upper chuck of the tensile tester, as shown in Fig. 1 (b). The sample is folded in two along the longitudinal direction into 100 mm×20 mm, and the folded part was placed abuttin the steel ball (0.7 mmφ) at the tip of the central bar in the measurement jig shown in Fig. 1 (a). The end on the opposite side of the folded sample was clipped to the lower chuck at the lower side of the measurement jig at a position where the distance from the tip of the piercing bar was 50 mm. Then, the chuck was pulled at 50 mm/min so that the folded part of the sample would be pierced by the steel ball (diameter 0.7 mm) at the tip of the stick. The load with which the sample was pierced was determined. The measurement was performed with n=5 and the average value of 3 measures excluding the highest and the lowest values was taken.

(Example 1)

1: Preparation of recycle pellet (1)

A polyethylene terephthalate resin (RE554 manufactured by Toyo Boseki Kabushiki Kaisha, intrinsic viscosity 0.62, melting point 255˚C) added with silicon dioxide (Silysia 310 manufactured by Fuji Silysia, 2000 ppm) in advance during polymerization was used as polyester resin (A), placed in a 60 mmφ extruder (I) and melted at 285˚C.
Furthermore, as polyester resin (B), terephthalic acid-ethylene glycol-cyclohensanedimethanol copolymer (FP301 manufactured by Toyo Boseki Kabushiki Kaisha, intrinsic viscosity 0.75, softening temperature of resin 180˚C) containing 30 mol% of cyclohensanedimethanol was charged in a different 60 mmφ extruder (II) and melted at 250˚C.
Thereafter, the contents of extruder (I) and extruder (II) in a molten state were led to 90 mmφ extruder (III) so that the discharge ratio would be (I)/(II)=65/35 (weight ratio) and mixed therein, extruded from a T-die at 265˚C to give an unstretched sheet with a thickness of 300 μm.
The obtained unstretched sheet was pulverized, extruded in strands at 285˚C from a 45 mmφ biaxial extruder, cooled with water, and cut to give recycle pellets (1).

2: Preparation of film

Polyester resin A was charged in a 60 mmφ extruder (I) and melted at 285˚C.
Furthermore, polyester resin (B) and the aforementioned recycle pellets (1) were adjusted to (B)/(1)=55/45 (weight ratio), placed in a 60 mmφ extruder (II) and melted at 260˚C.
Thereafter, the molten mixture was led to 90 mmφ extruder (III) so that the discharge ratio of extruder (I) and extruder (II) would be (I)/(II)=45.5/54.5 (weight ratio), mixed therein at 260˚C, and extruded from a T-die to give an unstretched sheet with a thickness of 235 μm.
The unstretched sheet was led to a roll drawing machine, stretched 3.5-fold at 95˚C in the longitudinal direction and further stretched 4.2-fold in the width direction with a tenter at 105˚C. The sheet was heat set at 220˚C while relaxing 3% in the width direction to give a film with a thickness of 16 μm. The property values are shown in Table 1.

(Example 2)

Recycle pellets and film were obtained in the same manner as in Example 1 except that a static mixer (number of elements 12, cylinder temperature 260˚C) was used instead of the extruder (III).

(Example 3)

Recycle pellets and film were obtained in the same manner as in Example 1 except that terephthalic acid-isophthalic acid-ethylene glycol copolymer (intrinsic viscosity 0.67, melting point 217˚C) containing 15 mol% of isophthalic acid was used as polyester resin (C) instead of polyester resin (B).

(Comparative Example 1)

The polyester resins (A) and (B) in Example 1 were adjusted to satisfy (A)/(B)=65/35 (weight ratio), placed in extruder (I) in pellets, and extruded from a T-die at 285˚C to give an unstretched sheet with a thickness of 300 μm.
The obtained unstretched sheet was pulverized, extruded in strands at 285˚C from a 45 mmφ biaxial extruder, cooled with water, and cut to give recycle pellets (2).
The polyester resins (A) and (B) and the aforementioned recycle pellets (2) were adjusted to satisfy (A)/(B)/(2)=45.5/24.5/30 (weight ratio), placed in extruder (I), melted at 285˚C and extruded from a T-die at 285˚C to give an unstretched sheet with a thickness of 235 μm.

Using the obtained sheet, a film with a thickness of 16 µm was obtained in the same manner as in Example 1. The property values are shown in Table 1.

(Comparative Example 2)

A film with a thickness of 16 µm was obtained in the same manner as in Example 1 except that the heat set temperature was 180˚C. The property values are shown in Table 1.

(Comparative Example 3)

In the same manner as in Example 1, recycle pellets (3) were prepared using an unstretched sheet obtained using extruders (I), (II) and (III), discharging at a discharge ratio of extruder (I) and extruder (II) of (I)/(II)=90/10 (weight ratio), and mixing in a molten state at 260˚C in extruder (III).
Then, polyester resin (A) was placed in 60 mmφ extruder (I) and melted at 285˚C.
Polyester resin (B) and the aforementioned recycle pellets (3) were adjusted to satisfy (B)/(1)=74/26 (weight ratio), placed in 60 mmφ extruder(II) and melted at 260˚C.
Thereafter, the molten mixture was led to extruder (III) so that the discharge ratio of extruder (I) and extruder (II) would be (I)/(II)=59.5/40.5 (weight ratio), mixed therein at 260˚C, and extruded from a T-die to give an unstretched sheet with a thickness of 235 µm.
Using the obtained sheet, a film with a thickness of 16 µm was obtained in the same manner as in Example 1. The property values are shown in Table 1.

(Comparative Example 4)

In the same manner as in Example 1, recycle pellets (3) were prepared using an unstretched sheet obtained using extruders (I), (II) and (III), discharging at a discharge ratio of extruder (I) and extruder (II) of (I)/(II)=20/80 (weight ratio), and mixing in a molten state at 260˚C in 90 mmφ extruder (III).
Then, polyester resin (A) was placed in 60 mmφ extruder (I) and melted at 285˚C.
Furthermore, polyester resin (B) and the aforementioned recycle pellet (4) were adjusted to satisfy (B)/(1) =35/65 in weight ratio, placed in 60 mmφ extruder (II) and melted at 260˚C.
Thereafter, the molten material was led to extruder (III) so that the discharge ratio of extruder (I) and extruder (II) would satisfy (I)/(II)=14/86 (weight ratio), mixed therein in a molten state at 260˚C, and extruded from a T-die to give a unstretched sheet with a thickness of 235 µm.
When the obtained sheet was stretched in the same manner as in Example 1, it was melted in the heat set zone and the film forming was not available. Thus, the film forming was performed with the heat set temperature of 160˚C, whereby a film with a thickness of 16 µm was obtained. The property values are shown in Table 1.
[Table 1]

| | Ex. 1 | Ex. 2 | Ex. 3 | Comp. Ex. 1 | Comp. Ex. 2 | Comp. Ex. 3 | Comp. Ex. 4 |
|---|---|---|---|---|---|---|---|
| PES resin (A) (wt%) | 65 | 65 | 65 | 65 | 65 | 90 | 20 |
| PES resin (A) (wt%) | 35 | 35 | - | 35 | 35 | 10 | 80 |
| PES resin (A) (wt%) | - | - | 35 | - | - | - | - |
| mixing method | melt mixing | melt mixing | melt mixing | pellet mixing | melt mixing | melt mixing | melt mixing |
| heat set temperature (°C) | 220 | 220 | 220 | 220 | 180 | 220 | 160 |
| Piercing strength (N) | 4.2 | 5.1 | 6.0 | 9.5 | 10.5 | 9.8 | 9.5 |
| hand-tearability | O | O | O | △ | × | × | × |
| bending property | ⊙ | ⊙ | O | △ | × | × | × |
| heat resistance | O | O | O | △ | △ | △ | × |

As is clear from Examples 1 to 3 and Comparative Examples 1 to 4, a polyester resin film obtained by a production method of a polyester resin film, which comprises mixing not less than 2 kinds of polyester resin starting materials having different melting points or melting temperatures, and extruding the mixture, wherein respective starting materials are cast in different extruders, melted, supplied to one mixer in a molten state, mixed and extruded to give a sheet, and the sheet is stretched at least in the monoaxial direction and heat-treated at a temperature of not lower than a temperature 3˚C lower than the melting point or melting temperature of the resin starting material having the lowest melting point or the lowest melting temperature has superior hand-tearability and twistability. Furthermore, the films of Examples 1, 2 and 3 showed a piercing strength of not more than 8.0.

**Industrial Applicability**

The film obtained by the present invention has easy-to-tear property and superior twistability, can be preferably used in a broad field as stick packaging, PTP packaging and drug bag, which are requested to have easy opening property, or twist packaging, folding packaging, or as a lid material, and greatly contributes to the industry.

**Claims**

1. A production method of a polyester resin film, which comprises mixing not less than 2 kinds of polyester resin starting materials having different melting points or melting temperatures, and extruding the mixture, wherein respective starting materials are cast in different extruders, melted, supplied to one mixer in a molten state, mixed and extruded to give a sheet, and the sheet is stretched at least in the monoaxial direction and heat-treated at a temperature of not lower than a temperature 3˚C lower than the melting point or melting temperature of the resin starting material having the lowest melting point or the lowest melting temperature.

2. The production method of claim 1, wherein the proportion of a resin having a melting point not higher than a temperature 3˚C higher than the heat treatment temperature is not less than 20 wt% and not more than 65 wt%.

3. The production method of claim 1 or 2, wherein the melting point of the resin having the highest melting point is not lower than 245˚C.

4. The production method of claim 1, 2 or 3, wherein the difference in the melting temperature of the resin having the highest melting point and the resin having the lowest melting point or the lowest melting temperature is not lower than 15˚C.

5. The production method of claim 1, 2, 3 or 4, which is superior in hand-tearability and twistability.

6. A polyester resin film, which is obtained by a method comprising mixing not less than 2 kinds of polyester resin starting materials having different melting points or melting temperatures, and extruding the mixture, wherein respective starting materials are cast in different extruders, melted, supplied to one mixer in a molten state, mixed and extruded to give a sheet, and the sheet is stretched at least in the monoaxial direction and heat-treated at a temperature of not lower than a temperature 3˚C lower than the melting point or melting temperature of the resin starting material having the lowest melting point or the lowest melting temperature, and shows a piercing strength of not more than 8.0N.

7. The polyester resin film of claim 6, wherein, at least after the monoaxial stretching, the sheet is heat-treated at a temperature of not lower than a temperature 3˚C lower than the melting point or melting temperature of the resin starting material having the lowest melting point or the lowest melting temperature.

8. The polyester resin film of claim 7, wherein the proportion of a resin having a melting point not higher than a temperature 3˚C higher than the heat treatment temperature is not less than 20 wt% and not more than 65 wt%.

9. The polyester resin film of claim 7 or 8, wherein the melting point of the resin having the highest melting point is not lower than 245˚C.

10. The polyester resin film of claim 6, 7, 8 or 9, wherein the difference in the melting temperature of the resin having the highest melting point and the resin having the lowest melting point or melting temperature is preferably not lower than 15˚C.

**11.** The polyester resin film of claim 6, 7, 8, 9 or 10, which is superior in the hand-tearability and twistability.

# FIG. 1

jig for piercing
strength measurement

piercing strength
measurement

15mm

tip 0.7mmø

100mm

tensile tester
chuck

sample

50mm

10mm

tensile tester
chuck

44mm

## INTERNATIONAL SEARCH REPORT

| International application No. |
| --- |
| PCT/JP2005/021836 |

A.  CLASSIFICATION OF SUBJECT MATTER
*B29C47/14*(2006.01), *B29C47/88*(2006.01), *B29C47/92*(2006.01), *B29C55/02*
(2006.01), *C08J5/18*(2006.01), *C08L67/02*(2006.01), *B29K67/00*(2006.01),
*B29L7/00*(2006.01)

According to International Patent Classification (IPC) or to both national classification and IPC

B.  FIELDS SEARCHED

Minimum documentation searched (classification system followed by classification symbols)
B29C47/00-47/96, B29C55/00-55/30, C08J5/18, C08L67/02

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2003-268131 A  (Toyobo Co., Ltd.), 25 September, 2003 (25.09.03), Claims 1, 2; Par. Nos. [0016], [0018] to [0020], [0022], [0029], [0043], [0044], [0047] & US 2005/0118442 A1    & EP 1473319 A1 & WO 2003/059996 A1 | 1-11 |
| X | JP 2001-335682 A  (Unitika Ltd.), 04 December, 2001 (04.12.01), Claim 1; Par. Nos. [0018], [0022], [0025] & US 2003/0069387 A1    & EP 1288261 A1 & WO 2001/092417 A1 | 1-11 |

☐  Further documents are listed in the continuation of Box C.          ☐  See patent family annex.

| | |
| --- | --- |
| \*      Special categories of cited documents:<br>"A"    document defining the general state of the art which is not considered    to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |
| Date of the actual completion of the international search<br>    24 February, 2006 (24.02.06) | Date of mailing of the international search report<br>    07 March, 2006 (07.03.06) |
| Name and mailing address of the ISA/<br>    Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3561919 B

- JP 2003155403 A